# EUROPÄISCHE PATENTSCHRIFT

(11) **EP 2 884 256 B1**
(45) Veröffentlichungstag und Bekanntmachung des Hinweises auf die Patenterteilung: **21.03.2018**
(21) Anmeldenummer: 14196907.1
(22) Anmeldetag: 09.12.2014
(51) Int. Cl.: G01N 9/24, G01F 23/288, G01N 23/10, G01T 1/20

(54) **RADIOMETRISCHE DICHTEPROFIL-MESSANORDNUNG**
RADIOMETRIC DENSITY PROFILE MEASUREMENT ASSEMBLY
DISPOSITIF RADIOMÉTRIQUE DE MESURE DU PROFIL DE DENSITÉ

(30) Priorität: 10.12.2013 DE 102013225509
(43) Veröffentlichungstag der Anmeldung: 17.06.2015
(73) Patentinhaber: VEGA Grieshaber KG, 77709 Wolfach (DE)
(72) Erfinder: Körnle, Ralf, 77736 Zell a. H. (DE)
(74) Vertreter: Westphal, Mussgnug & Partner Patentanwälte mbB

(56) Entgegenhaltungen:
- EP-A1- 1 239 303
- WO-A1-99/17085
- WO-A2-02/18883
- DE-A1- 19 722 837
- DE-A1-102011 085 943

## Beschreibung

Die vorliegende Erfindung betrifft eine radiometrische Dichteprofil-Messanordnung gemäß dem Oberbegriff des Patentanspruchs 1 sowie ein Verfahren zur radiometrischen Ermittlung eines Dichteprofils gemäß Patentanspruch 11.

Aus dem Stand der Technik sind verschiedene radiometrische Messanordnungen zur Ermittlung von Dichteprofilen bekannt, zum Beispiel aus WO 99/17085 A1, DE 197 22 837 A1 oder DE 10 2011 085943 A1. Diese Messanordnungen werden eingesetzt um bspw. in einem Behälter oder einem Tank berührungslos eine durch ihre Dichte charakterisierte Schichtverteilung verschiedener Füllgüter zu ermitteln.

Eine beispielhafte Anwendung hierfür ist die Detektion von unterschiedlichen Schichten bei der Erdölgewinnung. Bei der Erdölförderung werden beispielsweise Sand, Wasser und Rohöl gewonnen und in einem Tank gesammelt, wobei der Sand sedimentiert, und Erdöl und Wasser sich in Schichten abscheiden. Für die Weiterverarbeitung ist es notwendig die Schichten voneinander zu trennen und Sand und Wasser von dem Erdöl zu separieren, was bspw. durch Ablassen von Tankinhalt in einem unteren Bereich des Tanks erfolgen kann. Ausschlaggebend für diesen Vorgang ist es, nach Möglichkeit nur Wasser und Sand abzulassen und auf diese Weise kein Erdöl zu verschwenden.

Da sich die vorliegenden Materialien in ihrer Dichte unterscheiden, kommen hier entsprechende Dichte-Messanordnungen und -Verfahren zur Anwendung.

Die radiometrische Dichtemessung zeichnet sich dabei insbesondere dadurch aus, dass eine Messung unabhängig von Prozessbedingungen innerhalb eines Tanks und unabhängig von der konkreten chemischen Zusammensetzung des zu messenden Füllguts möglich ist. Insbesondere spielen etwaige korrosive Eigenschaften hierbei keine Rolle, da die notwendigen Messgeräte außerhalb des Tanks angeordnet werden können.

Das zugrundeliegende Messprinzip nutzt die dichteabhängige Absorption von Gammaquanten in verschiedenen Medien aus. Hierzu werden von einer oder mehreren Strahlungsquellen Gammaquanten durch das zu messende Füllgut in Richtung eines Messgerätes zur Detektion der dort ankommenden Strahlungsstärke ausgesendet. Abhängig von der Dichte des zwischen Strahlungsquelle und Messgerät befindlichen Füllgutes werden mehr oder weniger Gammaquanten durch das Füllgut absorbiert, sodass die Strahlungsstärke am Ort des Messgerätes ein Maß für die Dichte des Füllgutes darstellt.

Eine Detektion der Strahlungsstärke erfolgt dabei üblicherweise mit Hilfe eines sogenannten Szintillationszählers, der im Wesentlichen aus einem Szintillator zur Umwandlung der Gammastahlung in Lichtpulse und einem nachgeschalteten Photomultiplier zur Generierung elektrischer Impulse aus den Lichtpulsen besteht. Die elektrischen Impulse werden in einer nachgeschalteten Messelektronik weiterverarbeitet, bspw. verstärkt und gezählt. Die Zahl der ermittelten Pulse ist repräsentativ für die Strahlungsstärke und damit auch für die Dichte des Füllgutes. Je weniger Pulse ermittelt werden, umso höher ist die Dichte des Füllgutes.

Bei den aus dem Stand der Technik bekannten Verfahren wird in einem unteren Bereich des Tanks die Dichte im Bereich eines Mindestfüllstands, der von der Trennschicht zwischen Wasser und Erdöl nicht unterschritten werden darf mit einem einzelnen Messgerät überwacht. Soll bspw. zusätzlich ein maximaler Füllstand, bspw. für das Wasser oder den Sand überwacht werden, sind entsprechend weitere Messgeräte notwendig, die an den entsprechenden Füllständen angeordnet werden.

Zur Ermittlung der Zusammensetzung einer mehrschichtigen Anordnung aus Füllgütern oder zur Ermittlung eines Dichteprofils sind ungleich mehr Messgeräte vorzusehen.

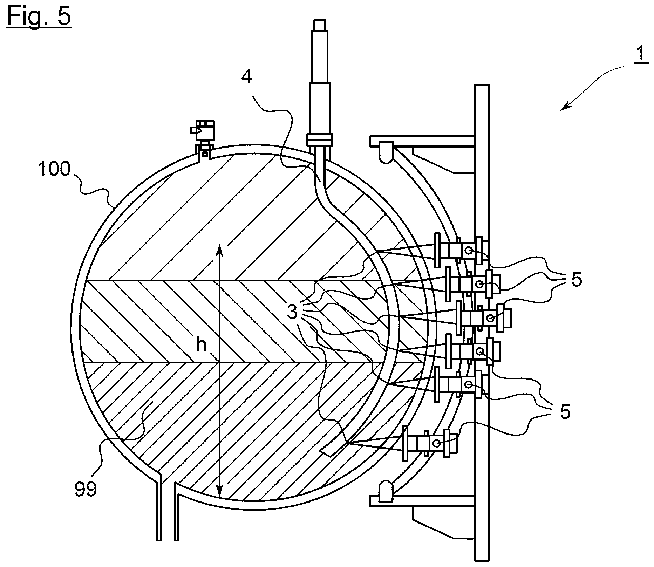

Eine entsprechende Anordnung ist in Figur 5 wiedergegeben.

Figur 5 zeigt eine radiometrische Dichteprofil-Messanordnung 1 gemäß dem Stand der Technik, bei der im Inneren eines Tanks 100 eine Mehrzahl, vorliegend sechs, radioaktiver Strahlungsquellen 3 angeordnet ist. Die Strahlungsquellen 3 sind an einer Lanze 4 angeordnet und derart ausgerichtet, dass ihre Strahlungskegel 31 eine vertikale Abstrahlebene definieren, in der eine zur Anzahl der Strahlungsquellen 3 korrespondierende Anzahl von Erfassungseinheiten bzw. Messgeräten 5 angeordnet ist. Wie Figur 5 zu entnehmen ist, sind also korrespondierend zu den sechs vorgesehenen Strahlungsquellen 3 horizontal versetzt sechs vertikal entsprechend der Strahlungsquellen 3 verteilte Messgeräte 5 angeordnet.

Durch eine horizontale Zuordnung eines Messgerätes 5 zu einer Strahlungsquelle 3 kann eine Dichtemessung in jeweils einer Füllhöhe h erfolgen und so ein Dichteprofil des in dem Tank befindlichen Füllgutes 99 ermittelt werden.

Bei einer weiteren aus dem Stand der Technik bekannten Methode werden jeweils eine Strahlungsquelle und ein dieser Strahlungsquelle zugeordnetes Messgerät vertikal entlang oder innerhalb des Füllgutes bewegt und so ein Dichteprofil ermittelt.

Aus WO 02/18883 A2 ist eine Vorrichtung zur Bestimmung des Dichteverlaufs eines Füllguts in einem Behälter bekannt mit einer Sendeeinheit und einzelnen Detektoreinheiten. Die Messsignale werden für jede Detektoreinheit in elektrische Signale umwandelt, die dann über eine Busleitung an eine Regel-/Auswerteeinheit weitergeleitet werden, um Profile zu erzeugen. EP 1 239 303 A1 offenbart ein Füllstandsmessgerät mit einer Strahlungsquelle und einem Detektor mit stabförmigem Szintillator, wobei zur Messung des Füllstands des Behälters das Impulsamplitudenspektrum verwendet wird.

Es ist die Aufgabe der vorliegenden Erfindung die Ermittlung eines Dichteprofils zu vereinfachen.

Diese Aufgabe wird durch eine radiometrische Dichteprofil-Messanordnung mit den Merkmalen des Patentanspruchs 1 und ein Messverfahren zur radiometrischen Ermittlung eines Dichteprofils gemäß Patentanspruch 11 gelöst. Vorteilhafte Weiterbildungen sind Gegenstand abhängiger Patentansprüche.

Eine erfindungsgemäße radiometrische Dichteprofil-Messanordnung zur Ermittlung eines Dichteprofils eines in einem Behälter befindlichen Füllgutes weist wenigstens zwei Strahlungsquellen und eine Erfassungseinheit zur Detektion radioaktiver Strahlung mit einem Szintillator zur Erzeugung strahlungsinduzierter Lichtblitze, einem einzigen photosensitiven Element zur Erzeugung eines elektrischen Signals auf Basis der Lichtblitze und eine Messelektronik zur Verarbeitung des elektrischen Signals auf, wobei der Szintillator langgestreckt ausgebildet und bevorzugt in Richtung einer zu erwartenden Dichteänderung angeordnet ist. Dem Szintillator können dabei auch mehrere, insbesondere wenigstens zwei, ebenfalls bevorzugt in Richtung der zu erwartenden Dichteänderung versetzt zueinander angeordnete Strahlungsquellen zugeordnet sein. Erfindungsgemäß weist die Messelektronik eine Amplitudenmesseinrichtung und eine Einrichtung zur Bestimmung einer Amplitudenverteilung, das heißt einer Beziehung zwischen Pulsamplituden in mV und der Anzahl der Pulsen je vorgegebenes mV-Intervall, auf, um auf einen Entstehungsort innerhalb des Szintillators und damit auf ein Dichteprofil des Füllgutes zu schließen.
In üblichen Messszenarien, bei denen bspw. das Dichteprofil des in dem Tank befindlichen Füllgutes ermittelt wird, wird die Richtung der zu erwartenden Dichteänderung in der Regel die Vertikalrichtung sein. Es sind aber auch andere Anwendungen denkbar, bei denen eine Dichteänderung bspw. aufgrund einer Verarbeitung in Horizontalrichtung oder einer beliebigen anderen Richtung erfolgt.

Eine erfindungsgemäße Messanordnung ermöglicht es, mit Hilfe eines einzigen Messgerätes ein Dichteprofil des in dem Behälter befindlichen Füllgutes zu ermitteln. Ausschlaggebend hierfür ist die Erkenntnis, dass die in dem langgestreckten Szintillator erzeugten Lichtblitze bei ihrer Ausbreitung in dem Szintillator einer Dämpfung unterworfen sind. Während die Anzahl der Lichtblitze repräsentativ für die Dichte des Füllgutes ist, kann aufgrund deren Intensität daher auf einen Entstehungsort innerhalb des Szintillators und damit z.B. auf eine zugeordnete Füllhöhe geschlossen werden.

Eine Bestimmung des Dichteprofils erfolgt über eine Auswertung des in der Messelektronik ermittelten elektrischen Signals hinsichtlich der auftretenden Amplituden der einzelnen Pulse.

Die Amplitudenmesseinrichtung ist im Stande, wenigstens die Maximalamplitude der einzelnen Pulse zu ermitteln. Bevorzugt ist die Amplitudenmesseinrichtung derart ausgestaltet, dass der Amplitudenverlauf der einzelnen Pulse ermittelt wird.

Die Dichteverteilung kann bspw. mittels eines Vergleiches der ermittelten Amplitudenverteilung mit Referenzamplitudenverteilungen erfolgen.

Um einen solchen Vergleich durchführen zu können ist es sinnvoll, wenn die Messelektronik einen Speicher zur Speicherung der Referenzamplitudenverteilungen und / oder der ermittelten Amplitudenverteilung aufweist. Ein Vergleich kann bspw. mittels einer Vergleichseinrichtung stattfinden.

Ein entsprechender Vergleich kann aber auch, was die vorliegende Erfindung nicht ausschließt, in einem der Messanordnung zugeordneten Messrechner stattfinden, der üblicherweise über eine höhere Rechenleistung zur Durchführung der notwendigen Vergleichsoperationen und gegebenenfalls notwendigen Messwertkorrekturen verfügen wird.

Zur Ermittlung eines je nach Bedarf entsprechend feingliedrigen Dichteprofils können dem Szintillator beispielsweise zwischen 2 und 10 Strahlungsquellen zugeordnet sein. Eine für viele Anwendungsfälle ausreichende Untergliederung kann erreicht werden, wenn dem Szintillator zwischen 4 und 6 Strahlungsquellen zugeordnet sind.

Wie bereits beschrieben sind die Strahlungsquellen bevorzugt entlang der Richtung der zu erwartenden Dichteänderung, insbesondere vertikal verteilt angeordnet, bspw. entsprechend der Füllhöhen in denen eine Dichteinformation benötigt wird.

Eine für viele Anwendungszwecke anpassbare und vielseitig einsetzbare Anordnung wird erreicht, wenn der Szintillator die Form eines langgestreckten flexiblen Zylinders aufweist. Auf diese Weise kann der Szintillator an verschiedenen Behälterformen angepasst und platzsparend angeordnet werden.

Eine für die Messung günstige Anordnung kann erreicht werden, wenn die Strahlungsquellen in einer Ebene mit dem Szintillator angeordnet sind.

Bei den derzeit verfügbaren Szintillatormaterialien sind Szintillatorlängen bis zu 10 m möglich. Eine darüber hinaus gehende Länge des Szintillators kann derzeit aufgrund der hohen Dämpfung, die Lichtpulse in den verfügbaren Szintillatormaterialien erfahren, nicht zum Einsatz kommen, da durch die Dämpfung Lichtpulse, die am freien Ende des Szintillators entstehen, in der Messelektronik nicht mehr detektierbar wären.

Bevorzugte Längen liegen daher zwischen 1 m und 10 m, wobei auch Längen zwischen 2 m und 8 m möglich sind.

Als bevorzugtes Szintillatormaterial kommen bei der vorliegenden Erfindung organische Polymere, vorzugsweise Polystyren in Form von Fasern mit 2 mm Durchmesser zum Einsatz, da diese im Vergleich zu den ansonsten erhältlichen Materialien gute Szintillations- und Lichtleiteigenschaften sowie eine gute Anpassbarkeit an beispielsweise verschiedene Behälterformen aufweisen.

Die Strahlungsquellen und der Szintillator sind vorzugsweise in einer Ebene mit einer Richtung einer erwarteten Dichteänderung angeordnet. Die Strahlungsquellen sind dabei vorzugsweise derart ausgestaltet, dass sie in Richtung des Szintillators und senkrecht zur Richtung der erwarteten Dichteänderung ihre Hauptabstrahlrichtung aufweisen. Als Hauptabstrahlrichtung soll hierbei die Symmetrieachse eines von einer Strahlungsquelle erzeugten Strahlungskegels betrachtet werden.

Auf diese Weise kann bspw. bei einer in vertikaler Richtung erwarteten Dichteänderung durch horizontale Ausrichtung der Hauptabstrahlrichtung der Strahlungsquellen eine gute Ermittlung eines Dichteprofils erreicht werden.

Die Strahlungsquellen sind dabei bevorzugt derart angeordnet und ausgebildet, dass die Strahlungskegel der Strahlungsquellen nicht überlappen. Auf diese Weise kann eine Zuordnung von Abschnitten auf dem Szintillator zu einzelnen Strahlungsquellen erreicht werden, was wiederum die Ermittlung eines Dichteprofils erleichtert.

Dies schließt aber nicht aus, dass die Strahlungskegel einzelner Strahler auch überlappen können.

Durch die größere Pulsrate, die durch überlappende Strahlungskegel erreicht wird, kann die Messung bei gleichem Strahler genauer und/oder schneller sein. Oder es könnten Strahlungsquellen eingespart werden. Die Strahlungswinkel könnten sogar so weit geöffnet werden, dass jeder Strahler den Szintillator in seiner gesamten Ausdehnung erreicht.

Die Strahlungsquellen weisen dabei bevorzugt einen Abstrahlwinkel derart auf, dass der Strahlungskegel einer Strahlungsquelle am Ort des Szintillators einen Durchmesser in der Längsrichtung des Szintillators zwischen 4 cm und 40 cm aufweist. Auf diese Weise kann eine ausreichende Zuordnung zu einer Messhöhe, innerhalb derer eine Dichteermittlung stattfinden soll, erreicht werden. Typischerweise weisen die verwendeten Strahlungsquellen einen Abstrahlwinkel zwischen 5° und 40° auf. Bei einem typischen Abstand von 50 cm zwischen der Strahlungsquelle und dem Szintillator kann auf diese Weise erreicht werden, dass durch eine Strahlenquelle eine Schicht mit einer Dicke von etwa 2 cm bis 16 cm bei der Dichteermittlung zugrunde liegt.

Ein typisches Messverfahren zur radiometrischen Ermittlung eines Dichteprofils wird bevorzugt mit einer Messanordnung, wie sie zuvor beschrieben wurde, durchgeführt, wobei eine Amplitudenverteilung ermittelter elektrischer Signale bestimmt wird und anhand der Amplitudenverteilung auf einen Entstehungsort innerhalb des Szintillators und damit auf ein Dichteprofil des Füllgutes geschlossen wird. Wie bereits erläutert, werden bei radiometrischen Messverfahren typischerweise Gammaquanten von einer Strahlungsquelle in Richtung eines Szintillators ausgesendet, der die dort eintreffenden Gammaquanten in eine zur Strahlungsintensität korrespondierende Anzahl von Lichtpulsen umwandelt. Die Lichtpulse werden nachfolgend in einer Messelektronik weiter verarbeitet, wobei mittels einer Quantifizierung der eintreffenden Lichtpulse sowie einer Betrachtung dieser Lichtpulse im Hinblick auf ihre Amplitude und auf eine Amplitudenverteilung das der Messung zugrunde liegende Dichteprofil eines zwischen den Strahlungsquellen und dem Szintillator angeordneten Füllgutes geschlossen werden kann.

Da sowohl die Entstehung der Lichtpulse innerhalb des Szintillators, eine auf die Lichtpulse innerhalb des Szintillators wirkende Dämpfung als auch eine Umwandlung der Lichtpulse in elektrische Signale, beispielsweise in einem Photomultiplier, Vorgänge sind, die statistischen Schwankungen unterliegen, werden diese vorzugsweise bei der Signalauswertung berücksichtigt. Es wird dazu bevorzugt eine statistische Korrektur der Amplitudenverteilung durchgeführt, wobei insbesondere vorstehend genannte drei Faktoren berücksichtigt werden.

Eine besonders einfache Ausgestaltung des Verfahrens kann erreicht werden, wenn die ermittelte Amplitudenverteilung mit Referenzamplitudenverteilungen verglichen und anhand dieses Vergleichs auf ein Dichteprofil geschlossen wird.

Erfindungsgemäß wird eine radiometrische Messanordnung mit wenigstens zwei Strahlungsquellen und einer Erfassungseinheit zur Detektion radioaktiver Strahlung mit einem Szintillator zur Erzeugung strahlungsinduzierter Lichtblitze, einem einzigen photosensitiven Element zur Erzeugung eines elektrischen Signals auf Basis der Lichtblitze und einer Messelektronik zur Verarbeitung des elektrischen Signals, bei der der Szintillator langgestreckt ausgebildet ist, wobei die Messelektronik eine Amplitudenmesseinrichtung und eine Einrichtung zur Bestimmung einer Amplitudenverteilung, das heißt einer Beziehung zwischen Pulsamplituden in mV und der Anzahl der Pulsen je vorgegebenes mV-Intervall, aufweist, zur Ermittlung eines Entstehungsorts innerhalb des Szintillators und damit eines Dichte-profils eines in einem Behälter befindlichen Füllgutes verwendet.

Die vorliegende Erfindung wird nachfolgend unter Bezugnahme auf die beigefügten Figuren eingehend erläutert. Es zeigen:
- Fig. 1: Ein vereinfachtes Blockschaltbild einer radiometrischen Dichteprofil-Messanordnung gemäß der vorliegenden Anmeldung,
- Fig. 2: ein Ausführungsbeispiel für eine radiometrische Dichteprofil-Messanordnung,
- Fig. 3: eine Ausschnittsvergrößerung aus Figur 2,
- Fig. 4: repräsentative Amplitudenverteilungen, wie sie bei einer Messanordnung gemäß den Figuren 1 und 2 ermittelt werden können und
- Fig. 5: eine radiometrische Dichteprofil-Messanordnung gemäß dem Stand der Technik (schon behandelt).

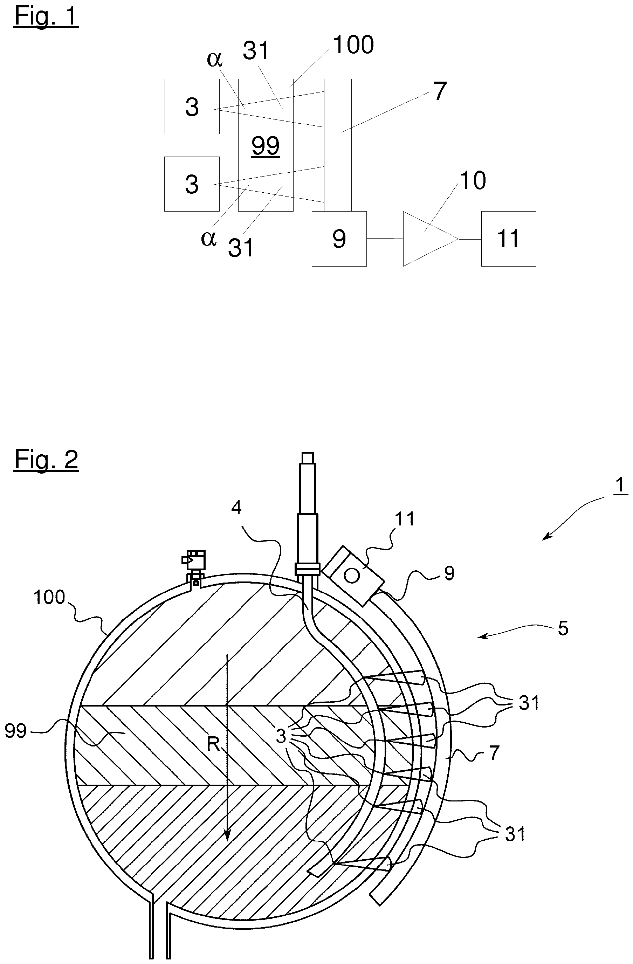

Figur 1 zeigt ein vereinfachtes Blockschaltbild einer radiometrischen Dichteprofil-Messanordnung 1 zur Ermittlung eines Dichteprofils eines in einem Behälter 100 befindlichen Füllgutes 99. Wie der Darstellung in Figur 1 entnommen werden kann, sind zwei Strahlungsquellen 3 vorgesehen, die den Behälter 100 mit dem darin angeordneten Füllgut 99 in Richtung eines langgestreckt ausgebildeten Szintillators 7 durchstrahlen. Die Strahlenquellen 3 sind dabei derart ausgebildet, dass ein Abstrahlwinkel α der Strahlungsquellen 3 derart gewählt ist, dass von den Strahlungsquellen erzeugte Strahlungskegel 31 bei einem Auftreffen auf den Szintillator 7 einander nicht überlappen.

Dem Szintillator 7 ist ein Photomultiplier 9 als photosensitives Element nachgeschaltet, in dem die in dem Szintillator 7 aufgrund der von den Strahlungsquellen 3 ausgesandten Gammaquanten erzeugten Lichtblitze in elektrische Signale überführt werden. Zur besseren Verarbeitbarkeit dieser Signale ist dem Photomultiplier 9 ein Verstärker 10 nachgeschaltet, der die im Photomultiplier 9 erzeugten Signale verstärkt, filtert und einer nachgeschalteten Messelektronik 11 zur Weiterverarbeitung zur Verfügung stellt. In der Messelektronik 11 kann dann eine weitere Bearbeitung der erzeugten elektrischen Signale und insbesondere eine Untersuchung der ermittelten elektrischen Impulse im Hinblick auf deren Amplitude und Amplitudenverteilung erfolgen.
Figur 2 zeigt ein praktisches Ausführungsbeispiel der Messanordnung 1 aus Figur 1.

Bei der Messanordnung 1 in Figur 2 sind die Strahlungsquellen 3 an einer Lanze 4 angeordnet, die im Inneren des Tanks 100 im Wesentlichen parallel zu dessen Außenwand verlaufend angeordnet ist. In dem Behälter 100, der im vorliegenden Ausführungsbeispiel als Kugeltank ausgestaltet ist, können beispielsweise die bei der Ölförderung typischerweise gewonnenen Produkte Sand, Wasser und Rohöl als Füllgut 99 enthalten sein. Die zuvor repräsentativ genannten Bestandteile werden in dem Kugeltank 100 ein Dichteprofil abbilden, wobei sich typischerweise der Sand am Boden des Tanks 100 absetzen, sich das Wasser darüber sammeln und das Rohöl auf der Wasserschicht angeordnet sein wird. Es ergibt sich dadurch eine Richtung R einer erwarteten Dichteänderung, die im vorliegenden Ausführungsbeispiel vertikal verläuft. Entsprechend ist für eine entsprechende Dichteprofil-Messung eine Änderung der Dichte in vertikaler Richtung besonders interessant. Die Strahlungsquellen 3 sind auf der Lanze 4 daher derart angeordnet, dass sie im Wesentlichen in horizontaler Richtung, das heißt senkrecht zur Richtung R einer erwarteten Dichteänderung, strahlen. Die Strahlungsquellen 3 sind außerdem derart ausgebildet, dass ihre Hauptabstrahlrichtungen H in einer vertikal verlaufenden Ebene liegen, in der auch ein schlauchförmig ausgebildeter Szintillator 7 angeordnet ist.

Der schlauchförmig ausgebildete Szintillator 7 ist im vorliegenden Ausführungsbeispiel aus einem organischen Polymer gebildet, das mit einer lichtdichten Schicht überzogen und endseitig mit einem Photomultiplier 9 gekoppelt ist. Dem Photomultiplier 9 ist wie im zuvor beschriebenen Blockschaltbild dargestellt ein Verstärker 10 und eine Messelektronik 11 nachgeschaltet, wobei der Verstärker 10 in der Darstellung in Figur 2 nicht gezeigt ist.

In dem in Figur 2 dargestellten Ausführungsbeispiel sind beispielhaft sechs Strahlungsquellen 3 dargestellt, deren Strahlungskegel 31 im Wesentlichen horizontal orientiert sind und insbesondere bei einem Auftreffen auf den Szintillator 7 in Längsrichtung L des Szintillator 7 gesehen einander nicht überlappen.

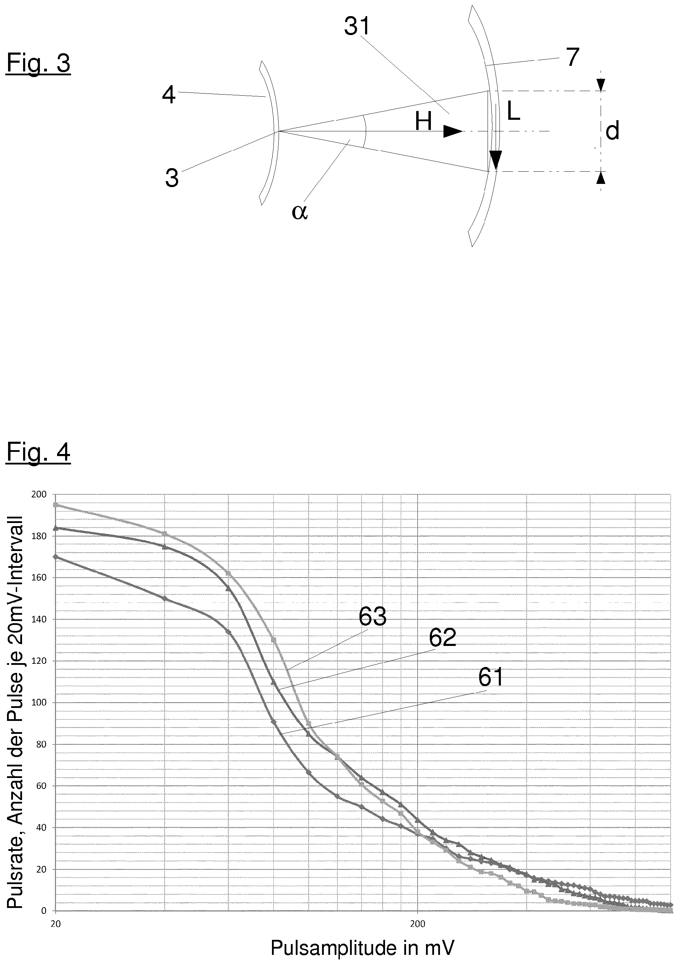

Figur 3 zeigt eine Ausschnittsvergrößerung aus Figur 2, bei der ein Abschnitt der Lanze 4 mit einer darauf angeordneten Strahlungsquelle 3 gezeigt ist, wobei aus dieser Ansicht besonders gut der Öffnungswinkel α des Strahlungskegels 31 sowie die Hauptabstrahlrichtung H der Strahlungsquelle 3 zu erkennen ist. Aufgrund des Öffnungswinkels α ergibt sich bei einem Auftreffen der von der Strahlungsquelle 3 ausgesandten Gammaquanten auf den Szintillator 7 ein Durchmesser d in Längsrichtung L des Szintillators 7. Die Längsrichtung L des Szintillators 7 ist im Wesentlichen durch dessen Längsachse bestimmt, wobei, wie dies in Figur 2 dargestellt ist, auch gebogene Formen, die an jeweilige Behälter 100 angepasst sind, denkbar sind. In diesen Fällen wäre die zu betrachtende Längsrichtung L des Szintillators 7 die Tangente in der durch die Strahlungsquellen definierten Ebene an den Szintillator 7 am Schnittpunkt einer Szintillatoroberfläche mit der Hauptabstrahlrichtung H der jeweils gerade betrachteten Strahlungsquelle 3.

Figur 4 zeigt drei beispielhafte Amplitudenverteilungen von Strahlungsquellen 3, die unterschiedliche Bereiche des Szintillators bestrahlen. Diese Szintillatorbereiche liegen in einem Abstand von 0 m (Kurve 61), 1 m (Kurve 62) und 3 m (Kurve 63) zu dem Photomultiplier. Aus Figur 4 ist deutlich erkennbar, dass beispielsweise die Strahlungsquelle 3, die im Abstand von 3 m von dem Photomultiplier 9 angeordnet ist, eine geringere Anzahl an Pulsen mit großer Pulsamplitude und dafür eine höhere Anzahl an Pulsen mit niedriger Pulsamplitude liefert. Die in einem Abstand von 1 m von dem Photomultiplier 9 entfernt angeordnete Strahlungsquelle 3 liefert entsprechend einen etwas höheren Anteil an elektrischen Pulsen in einem hohen Bereich (600 mV bis 1000 mV) und in einem mittleren Bereich 200 mV bis 500 mV, wobei entsprechend die Anzahl der Pulse mit einer niedrigen Amplitude niedriger als bei der Strahlungsquelle in einem Abstand von 3 m zu dem Photomultiplier 9 liegt.

Die dritte, in einem Abstand von 3 m angeordnete Quelle liefert damit im Vergleich zu den beiden anderen Quellen in einem mittleren und hohen Amplitudenbereich, vorliegend 250 mV bis 1000 mV, die geringste Anzahl von Impulsen, wobei die Anzahl der Impulse in einem niedrigen Amplitudenbereich im Bereich 0 mV bis 100 mV am höchsten liegt.

Da die vorliegend verwendeten Quellen an der jeweils zugeordneten Stelle des Szintillators 7 eine im Wesentlichen gleiche Anzahl an Pulsen mit im Wesentlichen gleicher Intensitätsverteilung erzeugen, werden die vorliegenden Unterschiede annähernd ausschließlich durch die in dem Szintillator 7 auf die erzeugten Lichtpulse wirkende Dämpfung hervorgerufen, sodass anhand der ermittelten Amplitudenverteilung auf einen Entstehungsort innerhalb des Szintillators 7 geschlossen werden kann. Mit dieser zugrunde liegenden Kenntnis kann mit Hilfe entsprechender mathematischer und statistischer Methoden oder, wie bereits zuvor beschrieben, mit Hilfe von Referenzamplitudenverteilungen auf eine Dichteverteilung innerhalb des Tanks 100 geschlossen werden.

Besonders vorteilhaft ist es hierbei, wenn die grundsätzlich in Frage kommenden Füllmedien und deren Dichte vorbekannt sind, da auf diese Weise bestimmte Referenzszenarien zugrunde gelegt werden können.

### Bezugszeichenliste

- 1: Messanordnung
- 3: Strahlungsquelle
- 4: Lanze
- 5: Erfassungseinheit bzw. Messgerät
- 7: Szintillator
- 9: Photomultiplier / photosensitives Element

- 10: Verstärker
- 11: Messelektronik
- 13: Amplitudenmesseinrichtung

- 31: Strahlungskegel

- 99: Füllgut

- 100: Behälter / Tank

- α: Abstrahlwinkel
- l: Länge
- R: Richtung

- d: Durchmesser
- H: Hauptabstrahlrichtung
- L: Längsrichtung

- h: Füllhöhe

## Patentansprüche

1. Radiometrische Dichteprofil-Messanordnung (1) zur Ermittlung eines Dichteprofils eines in einem Behälter (100) befindlichen Füllgutes (99) mit wenigstens zwei Strahlungsquellen (3) und einer Erfassungseinheit (5) zur Detektion radioaktiver Strahlung mit einem Szintillator (7) zur Erzeugung strahlungsinduzierter Lichtblitze, einem einzigen photosensitiven Element (9) zur Erzeugung eines elektrischen Signals auf Basis der Lichtblitze und einer Messelektronik (11) zur Verarbeitung des elektrischen Signals, wobei der Szintillator (7) langgestreckt ausgebildet ist,
**dadurch gekennzeichnet, dass** die Messelektronik (11) eine Amplitudenmesseinrichtung (13) und eine Einrichtung zur Bestimmung einer Amplitudenverteilung, das heißt einer Beziehung zwischen Pulsamplituden in mV und der Anzahl der Pulsen je vorgegebenes mV-Intervall, aufweist, die ausgebildet ist, um auf einen Entstehungsort innerhalb des Szintillators (7) und damit auf ein Dichteprofil des Füllgutes (99) zu schließen.

2. Radiometrische Dichteprofil-Messanordnung (1) nach Anspruch 1,
**dadurch gekennzeichnet, dass** dem Szintillator (7) zwischen 2 und 10 Strahlungsquellen (3), bevorzugt zwischen 4 und 6 Strahlungsquellen (3) zugeordnet sind.

3. Radiometrische Dichteprofil-Messanordnung (1) nach einem der vorhergehenden Ansprüche,
**dadurch gekennzeichnet, dass** der Szintillator (7) als langgestreckter flexibler Zylinder ausgebildet ist.

4. Radiometrische Dichteprofil-Messanordnung (1) nach einem der vorhergehenden Ansprüche,
**dadurch gekennzeichnet, dass** die Strahlungsquellen (3) in einer Ebene mit dem Szintillator (7) angeordnet sind.

5. Radiometrische Dichteprofil-Messanordnung (1) nach einem der vorhergehenden Ansprüche,
**dadurch gekennzeichnet, dass** der Szintillator (7) eine Länge (l) zwischen 1 m und 10 m Metern, bevorzugt zwischen 2 m und 8m, aufweist.

6. Radiometrische Dichteprofil-Messanordnung (1) nach einem der vorhergehenden Ansprüche,
**dadurch gekennzeichnet, dass** der Szintillator (7) aus einem organischen Polymer, vorzugsweise aus Polystyren besteht.

7. Radiometrische Dichteprofil-Messanordnung (1) nach einem der vorhergehenden Ansprüche,
**dadurch gekennzeichnet, dass** die Strahlungsquellen (3) und der Szintillator (7) in einer Ebene mit einer Richtung einer erwarteten Dichteänderung angeordnet sind.

8. Radiometrische Dichteprofil-Messanordnung (1) nach einem der vorhergehenden Ansprüche,
**dadurch gekennzeichnet, dass** die Strahlungsquellen (3) derart angeordnet und ausgebildet sind, dass Strahlungskegel (31) der Strahlungsquellen (3) nicht überlappen.

9. Radiometrische Dichteprofil-Messanordnung (1) nach Anspruch 8,
**dadurch gekennzeichnet, dass** die Strahlungsquellen (3) einen Abstrahlwinkel (α) derart aufweisen, dass ein Strahlungskegel (31) einer Strahlungsquelle (3) am Ort des Szintillators (7) einen Durchmesser (d) in Längsrichtung (L) des Szintillators (7) zwischen 4 und 40 cm aufweist.

10. Radiometrische Dichteprofil-Messanordnung (1) nach Anspruch 8,
**dadurch gekennzeichnet, dass** die Strahlungsquellen (3) einen Abstrahlwinkel (α) zwischen 5° und 40° aufweist.

11. Radiometrisches Dichteprofil-Messverfahren mit einer Messanordnung (1) gemäß einem der vorhergehenden Ansprüche,
**dadurch gekennzeichnet, dass** eine Amplitudenverteilung ermittelter elektrischer Signale bestimmt wird und anhand der Amplitudenverteilung auf einen Entstehungsort innerhalb des Szintillators (7) und damit auf ein Dichteprofil des Füllgutes (99) geschlossen wird.

12. Radiometrisches Dichteprofil-Messverfahren gemäß Anspruch 11,
**dadurch gekennzeichnet, dass** eine statistische Korrektur der Amplitudenverteilung durchgeführt wird.

13. Radiometrisches Dichteprofil-Messverfahren gemäß einem der Ansprüche 11 und 12,
**dadurch gekennzeichnet, dass** die Amplitudenverteilung mit Referenzamplitudenverteilungen verglichen und anhand dieses Vergleichs auf ein Dichteprofil geschlossen wird.

## Claims

1. Radiometric density profile measuring arrangement (1) for determining a density profile of a filling material (99) located in a container (100) comprising at least two radiation sources (3) and a detection unit (5) for detecting radioactive radiation with a scintillator (7) to generate radiation-induced light flashes, one single photosensitive element (9) for generating an electric signal based on the light flashes, and measurement electronics (11) for processing the electric signal, wherein the scintillator (7) has an elongated form, **characterised in that** the measurement electronics (11) comprises an amplitude measuring device (13) and a device for determining an amplitude distribution, that is to say a relationship between pulse amplitudes in mV and the number of pulses per specified mV interval, which is designed to allow conclusions to be drawn as to a place of origin within the scintillator (7) and thus a density profile of the filling material (99).

2. Radiometric density profile measuring arrangement (1) according to claim 1, **characterised in that** between 2 and 10 radiation sources (3), preferably between 4 and 6 radiation sources (3), are assigned to the scintillator (7).

3. Radiometric density profile measuring arrangement (1) according to one of the preceding claims, **characterised in that** the scintillator (7) is configured as an elongated flexible cylinder.

4. Radiometric density profile measuring arrangement (1) according to one of the preceding claims, **characterised in that** the radiation sources (3) are arranged in one plane with the scintillator (7).

5. Radiometric density profile measuring arrangement (1) according to one of the preceding claims, **characterised in that** the scintillator (7) has a length between 1 m and 10 m, preferably between 2 m and 8 m.

6. Radiometric density profile measuring arrangement (1) according to one of the preceding claims, **characterised in that** the scintillator (7) consists of an organic polymer, preferably polystyrene.

7. Radiometric density profile measuring arrangement (1) according to one of the preceding claims, **characterised in that** the radiation sources (3) and the scintillator (7) are arranged in one plane with a direction towards an expected change in density.

8. Radiometric density profile measuring arrangement (1) according to one of the preceding claims, **characterised in that** the radiation sources (3) are arranged and configured so that the radiation cones of the radiation sources (3) do not overlap.

9. Radiometric density profile measuring arrangement (1) according to claim 8, **characterised in that** the radiation sources (3) have an emission angle (α) in such a way that the radiation cone (31) of a radiation source (3) has at the location of the scintillator (7) a diameter (d) in the longitudinal direction (L) of the scintillator (7) between 4 to 40 cm.

10. Radiometric density profile measuring arrangement (1) according to claim 8, **characterised in that** the radiation sources (3) have an emission angle (α) between 5° to 40°.

11. Radiometric density profile measuring method with a measuring arrangement (1) according to one of the preceding claims, **characterised in that** an amplitude distribution of detected electric signals is determined and on the basis of the amplitude distribution conclusions are drawn as to a place of origin within the scintillator (7) and thus to a density profile of the filling material (99).

12. Radiometric density profile measuring method according to claim 11, **characterised in that** a statistical correction of the amplitude distribution is carried out.

13. Radiometric density profile measuring method according to one of claims 11 and 12, **characterised in that** the amplitude distribution is compared with reference amplitude distributions and on the basis of this comparison conclusions are drawn as to a density profile.

## Revendications

1. Dispositif de mesure de profil de densité par radiométrie (1) permettant de déterminer le profil de densité d'un produit (99) situé dans un récipient (100), comprenant au moins deux sources de rayonnement (3) et une unité de détection (5) permettant de détecter un rayonnement radioactif, un scintillateur (7) permettant de produire des flashs lumineux induits par le rayonnement, un élément photosensible unique (9) permettant de produire un signal électrique à partir des flashs lumineux, et une électronique de mesure (11) permettant de traiter le signal électrique, le scintillateur (7) s'étendant longitudinalement,
**caractérisé en ce que**
l'électronique de mesure (11) comporte un dispositif de mesure d'amplitude (13) et un dispositif permettant de déterminer la distribution d'amplitudes c'est-à-dire la relation entre des amplitudes d'impulsions en mV et le nombre d'impulsions pour chaque intervalle de mV prédéfini, qui est réalisé pour conclure à un point de formation dans le scintillateur (7) et par suite au profil de densité du produit (99).

2. Dispositif de mesure de profil de densité par radiométrie (1) conforme à la revendication 1,
**caractérisé en ce qu'**
entre 2 et 10 sources de rayonnement (3), de préférence entre 4 et 6 sources de rayonnement (3) sont associées au scintillateur (7).

3. Dispositif de mesure de profil de densité par radiométrie (1) conforme à l'une des revendications précédentes,
**caractérisé en ce que**
le scintillateur (7) est réalisé sous la forme d'un cylindre flexible s'étendant longitudinalement.

4. Dispositif de mesure de profil de densité par radiométrie (1) conforme à l'une des revendications précédentes,
**caractérisé en ce que**
les sources de rayonnement (3) sont situées dans un plan dans lequel est situé le scintillateur (7).

5. Dispositif de mesure de profil de densité par radiométrie (1) conforme à l'une des revendications précédentes,
**caractérisé en ce que**
le scintillateur (7) a une longueur (1) comprise entre 1 m et 10 m et de préférence entre 2 m et 8 m.

6. Dispositif de mesure de profil de densité par radiométrie (1) conforme à l'une des revendications précédentes,
**caractérisé en ce que**
le scintillateur (7) est réalisé en un polymère organique, de préférence en polystyrène.

7. Dispositif de mesure de profil de densité radiométrique (1) conforme à l'une des revendications précédentes,
**caractérisé en ce que**
les sources de rayonnement (3) et le scintillateur (7) sont situés dans un plan ayant l'orientation de la variation de densité attendue.

8. Dispositif de mesure de profil de densité par radiométrie (1) conforme à l'une des revendications précédentes,
**caractérisé en ce que**
les sources de rayonnement (3) sont montées et réalisées de sorte que leurs cônes de rayonnement (31) ne se chevauchent pas.

9. Dispositif de mesure de profil de densité par radiométrie (1) conforme à la revendication 8,
**caractérisé en ce que**
les sources de rayonnement (3) ont un angle de rayonnement (α) tel que le cône de rayonnement (31) d'une source de rayonnement (3) ait, sur le lieu du scintillateur (7) un diamètre (d) dans la direction longitudinale (L) de ce scintillateur (7) compris entre 4 et 40 cm.

10. Dispositif de mesure de profil de densité par radiométrie (1) conforme à la revendication 8,
**caractérisé en ce que**
les sources de rayonnement (3) ont un angle de rayonnement (α) compris entre 5° et 40°.

11. Procédé de mesure de profil de densité par radiométrie avec un dispositif de mesure (1) conforme à l'une des revendications précédentes,
**caractérisé en ce qu'**
une distribution d'amplitudes de signaux électriques détectés est déterminée, et à partir de cette distribution d'amplitudes, on conclut à un point de formation dans le scintillateur (7) et par suite au profil de densité du produit (99).

12. Procédé de mesure de profil de densité par radiométrie conforme à la revendication 11,
**caractérisé en ce que**
l'on effectue une correction statistique de la distribution d'amplitudes.

13. Procédé de mesure de profil de densité par radiométrie conforme à l'une des revendications 11 et 12,
**caractérisé en ce que**
la distribution d'amplitude est comparée à une distribution d'amplitude de référence, et sur le fondement de cette comparaison on conclut à un profil de densité.
